# EUROPÄISCHE PATENTSCHRIFT

(11) **EP 2 149 034 B1**
(45) Veröffentlichungstag und Bekanntmachung des Hinweises auf die Patenterteilung: **01.03.2017**
(21) Anmeldenummer: 08758072.6
(22) Anmeldetag: 20.05.2008
(51) Int. Cl.: G01D 5/14

(54) **POSITIONS- UND/ODER WEGSENSOR**
POSITION AND/OR MOVEMENT SENSOR
CAPTEUR DE POSITION ET/OU DE DÉPLACEMENT

(30) Priorität: 24.05.2007 DE 102007024333
(43) Veröffentlichungstag der Anmeldung: 03.02.2010
(73) Patentinhaber: Marquardt GmbH, 78604 Rietheim-Weilheim (DE)
(72) Erfinder: ALLMENDINGER, Frank, 70327 Stuttgart (DE); WEISSER, Dietmar, 78532 Tuttlingen (DE); BINDER, Eberhard, 71254 Schöckingen (DE); PREISSER, Dietmar, 70599 Stuttgart (DE); WITTIG, Bernd, 33104 Paderborn (DE)
(74) Vertreter: Otten, Roth, Dobler & Partner mbB Patentanwälte
(86) Internationale Anmeldenummer: PCT/DE2008/000829
(87) Internationale Veröffentlichungsnummer: WO 2008/141619

(56) Entgegenhaltungen:
- WO-A-03/029758
- WO-A1-2006/106454
- DE-B3-102005 018 826
- US-A1- 2006 055 787

## Beschreibung

Die Erfindung betrifft eine Vorrichtung zur Weg- und/oder Positions- und/oder Geschwindigkeitsmessung nach dem Oberbegriff des Patentanspruchs 1.

Solche Weg- und/oder Positionsmeßvorrichtungen finden in Haushaltsgeräten Verwendung. Beispielsweise kann in einer Waschmaschine die Wegmessung zur Beladungserkennung der Wäschetrommel sowie die Positionsmessung zur Detektierung des Schwingungsverhaltens der Wäschetrommel dienen.

Aus der DE 102 44 703 A1 ist eine Vorrichtung zur Weg- und/oder Positionsmessung mit einem rampenförmig ausgestalteten Magneten und mit einem die Magnetfeldstärke detektierenden Sensor bekannt. Der Magnet und/oder der Sensor wirkt mit einem beweglichen Element zusammen, so daß mittels des beweglichen Elementes eine Relativbewegung zwischen dem Sensor und dem Magneten bewirkbar ist. Die vom Magneten erzeugte Magnetfeldstärke verläuft linear rampenförmig, wodurch wiederum der Weg und/oder die Position des beweglichen Elementes in einer einzigen Dimension aufgrund der vom Sensor detektierten Magnetfeldstärke feststellbar ist. Anregungen zur Detektierung der Position in mehr als einer Dimension sind diesem Dokument nicht zu entnehmen.

Außerdem benötigt die bekannte Vorrichtung einen großen und damit kostenintensiven Magneten. Der Magnet muß ein nahezu lineares Magnetfeld aufweisen, da die Positionsbestimmung auf einem sich linear verändernden Magnetfeld basiert sowie auf der Auswertung des dadurch erzeugten Kennfeldes beruht. Diese Limitierung auf lineare Magnetfelder begrenzt die Anwendungsgebiete der bekannten Vorrichtung.

Eine weitere Vorrichtung zur Weg- und/oder Positionsmessung mit einem Magneten und mit einem die Magnetfeldstärke detektierenden Sensor ist aus der DE 10 2005 018 826 B3 bekannt. Bei dieser Weg- und/oder Positionsmeßvorrichtung ist der Magnet derart ausgestaltet, daß dieser ein im wesentlichen dipolförmiges Magnetfeld erzeugt. Der Sensor stellt die im Sensor am selben Ort wirkenden Komponenten des Magnetfeldes in zwei oder in drei linear unabhängige Raumrichtungen fest. Weiter ist aus der WO 2006/106454 A1 eine Vorrichtung zur Positionsmessung mit einem kugelförmigen Permanentmagnet bekannt, der ein dipolförmiges Magnetfeld erzeugt. Ein Sensor stellt de Komponenten des Magnetfeldes in zwei linear unabhängige Raumrichtungen fest. Schließlich zeigt die US 2006/055787 A1 eine Vorrichtung zur Weg- und/oder Positionsmessung mit einem Magneten und mit einem die Magnetfeldstärke zweidimensional detektierenden Sensor für die Anordnung in einem Bildstabilisator einer Kamera.

Der Erfindung liegt die Aufgabe zugrunde, eine für mehr als eine Dimension geeignete Weg- und/oder Positions- und/oder Geschwindigkeitsmeßvorrichtung zu schaffen. Insbesondere soll die Vorrichtung eine 3D(dreidimensionale)-Positionsmessung ermöglichen, beispielsweise mit absoluten Meßstrecken zwischen 5 und bis zu ca. 50 mm.

Diese Aufgabe wird bei einer gattungsgemäßen Vorrichtung zur Weg- und/oder Positions-und/oder Geschwindigkeitsmessung durch die kennzeichnenden Merkmale des Anspruchs 1 gelöst.

Bei der erfindungsgemäßen Weg- und/oder Positions- und/oder Geschwindigkeitsmeßvorrichtung handelt es sich bei dem Magneten um einen Stabmagnet, welcher ein weitgehend dipolförmiges Magnetfeld erzeugt. Der Stabmagnet kann in kostengünstiger Weise als zylinderförmiger Magnet ausgestaltet sein, dessen Verhältnis von Höhe zu Durchmesser, also das sogenannte Aspektverhältnis, in etwa 1:1 beträgt. Der Stabmagnet ist zweckmäßigerweise parallel zu seiner Symmetrieachse, also zur Mittelachse des Zylinders, magnetisiert. Ebenso geeignet als Magnet ist ein kugelförmiger Magnet oder auch ein zylinderförmiges Element, an dessen beiden Grundflächen ein in etwa kegelförmiges Element mit abgeflachter Spitze angeordnet ist. Vorteilhafterweise ist damit ein geringerer Ressourcenverbrauch sowie eine verbesserte Kostengünstigkeit gegeben, da der Magnet erheblich kleiner als bisher ausgestaltet sein kann. Dadurch daß die Magnetfeldkomponenten am gleichen Ort, also an einem einzigen sensitiven Punkt ermittelt werden, ermöglicht die Weg- und/oder Positions- und/oder Geschwindigkeitsmeßvorrichtung eine exakte zwei- und/oder dreidimensionale Ortsbestimmung. Mit Hilfe der erfindungsgemäßen Vorrichtung läßt sich somit der Abstand von zwei Objekten im Raum in den drei Dimensionen erfassen. Weitere Ausgestaltungen der Erfindung sind Gegenstand der Unteransprüche.

In einer einfach zu realisierenden Ausgestaltung handelt es sich bei dem Sensor um einen zwei- und/oder dreidimensional messenden Hallsensor und/oder bei dem Magneten um einen Permanentmagnet. Um eine hohe Genauigkeit der Messung zu gewährleisten, besitzt der Sensor in einer weiteren Ausbildung als dreidimensional messendes Hallsensorsystem fünf sensitive Hallflächen, wobei die Chipflächen in etwa kreuzförmig in der Art eines Sensor-Arrays angeordnet sind. Für die Messung der Magnetfeldkomponente in z-Richtung ist eine vertikal zur Chipoberfläche messende Hallfläche im Kreuzungs- oder Mittelpunkt des Sensor-Arrays als z-Sensor angeordnet. Für die Messung der Magnetfeldkomponenten in x- sowie y-Richtung sind jeweils zwei parallel zur Chipoberfläche messende Hallflächen dem Kreuzungspunkt des Sensor-Arrays jeweils gegenüberliegend als x- sowie y-Sensoren angeordnet, wobei die beiden Hallflächen jeweils in Richtung einer Achse des Kreuzes verlaufen. Die beiden jeweiligen Hallflächen für den x- sowie den y-Sensor sind miteinander elektrisch verbunden, beispielsweise indem diese fest miteinander verdrahtet sind. Dadurch wird die jeweilige mittlere Magnetfeldkomponente vom x- sowie y-Sensor am Ort des z-Sensors bestimmt. Es erfolgt somit die Messung des dreidimensionalen Magnet(B)-Feldes vollständig am selben Ort, nämlich im Mittelpunkt des Kreuzes.

Der Sensor kann mit wenigstens zwei, insbesondere jedoch drei parallelen Analog-Digital-Wandlern versehen sein. Die Analog-Digital-Wandler erfassen gleichzeitig die Hallsensorspannungen für die Hallflächen des x-, y- sowie z-Sensors. Dadurch lassen sich auch bei großen Abstandsänderungen pro Zeit präzise Ergebnisse für den Ort und/oder die Geschwindigkeit berechnen. Die Hallflächen und/oder die Analog-Digital-Wandler können in einem in der Art eines ASIC-Chips ausgestalteten integrierten Schaltkreis angeordnet sein, womit die Vorrichtung zur Weg- und/oder Positions- und/oder Geschwindigkeitsmessung sich insgesamt sehr kompakt ausgestalten läßt. Dabei kann es sich anbieten, noch weitere Schaltungsteile für die Steuerung des Sensors, für die Kommunikation mit dem Sensor o. dgl. in dem integrierten Schaltkreis anzuordnen, was auch der Kostengünstigkeit für die Vorrichtung zur Weg- und/oder Positions- und/oder Geschwindigkeitsmessung zu Gute kommt.

In kostengünstiger Weise kann der Magnet direkt am beweglichen Element mit einer Verrastung befestigt, in das bewegliche Element eingesetzt, in das bewegliche Element integriert o. dgl. sein. Alternativ kann der Magnet auch in einer Halterung angeordnet sein, wobei die Halterung am beweglichen Element befestigt ist. Die letztgenannte Ausgestaltung eignet sich besonders gut zur Verwendung in einem Haushaltsgerät, beispielsweise für eine Waschmaschine.

Wie bereits erwähnt, ist eine kleinbauende Ausbildung dadurch gegeben, daß der Sensor in der Art eines integrierten Schaltkreises ausgestaltet ist. Desweiteren kann der Sensor auf einer Leiterplatte angeordnet sein. Um die Weg- und/oder Positions- und/oder Geschwindigkeitsmeßvorrichtung mit eigener Intelligenz in autarker Weise auszustatten, ist eine Elektronik zur Auswertung des Sensorsignals auf der Leiterplatte befindlich. Zum Schutz vor schädigenden Einflüssen bietet es sich an, die Leiterplatte mitsamt dem Sensor in einem Gehäuse anzuordnen. Das Gehäuse kann dann an einem gegenüber dem beweglichen Element feststehenden Element befestigt sein, was sich vor allem bei einem Hausgerät in vorteilhafter Weise anbietet.

Zusammenfassend ist für eine besonders bevorzugte Ausführung zu sagen, daß die 3D-Ortsbestimmung auf Basis eines dipolförmigen Magnetfeldes und eines dreidimensional messenden Sensorsystems, das insbesondere mittels des Hall-Effekts arbeitet, erfolgt. Dabei besteht das Positionserfassungssystem aus einem Magneten, der ein Magnetfeld erzeugt, das aufgrund seiner Geometrie und Magnetisierung möglichst wenig von einem idealen Dipolfeld abweicht, sowie einem Hallsensor, der die drei Magnetfeldkomponenten erfaßt. Aus den Magnetfeldkomponenten können durch mathematische Invertierung des Dipolfeldes die Ortskoordinaten berechnet werden. Dabei müssen die Magnetfeldkomponenten möglichst im Hallsensor am gleichen Ort gemessen werden. Dies ist durch eine Anordung mit fünf sensitiven Hallflächen in einer kreuzförmigen Art gegeben. Um auch bei großen Abstandsänderungen pro Zeit präzise Ergebnisse für den Ort und die Geschwindigkeit berechnen zu können, ist die gleichzeitige Erfassung der Hallsensorspannungen über drei parallele Analog-Digital-Wandler notwendig.

Ein solches Sensorsystem, das beispielsweise einen Magneten sowie einen Hallsensor zur Messung verwendet, kann den Abstand von Magnet und Hallsensor zueinander kontinuierlich erfassen und damit beispielsweise die Bewegungen des Schwingsystems einer Waschmaschine ermitteln. Das Ausgangssignal des Sensors kann dann in geeigneter Form an die Steuerung einer Waschmaschine übermittelt werden, um Nachfolgendes in der Waschmaschine zu ermöglichen:
- Erkennung und Vermeidung von Systemanschlägen beim Resonanzdurchgang,
- Unwuchtabhängige Regelung der Schleuderenddrehzahl sowie
- Beladungserkennung.
Somit ist ein dreidimensional messender Positionssensor beispielsweise zur Beladungsmessung, Resonanzerkennung und/oder Unwuchterkennung für die Waschmaschine geschaffen.

Die Vorteile beim Einsatz eines dreidimensional messenden Positionssensors in Waschmaschinen bestehen darin, daß größere Trommeln mit einem Fassungsvermögen von 7 oder 8 kg Wäsche in einem Waschmaschinengehäuse mit einer Standardbreite von 60 cm realisierbar sind. Dies wird dadurch ermöglicht, daß die Position der Trommel zum Gehäuse gemessen werden kann. Basierend auf diesem Signal kann die Waschmaschinensteuerung drohende Anschläge der Trommel an das Gehäuse erkennen und entsprechend reagieren.

Die weiteren mit der Erfindung erzielten Vorteile bestehen insbesondere darin, daß die Weg- und/oder Positions- und/oder Geschwindigkeitsmeßvorrichtung aufgrund des einfachen mechanischen Aufbaus kostengünstig sowie einfach herzustellen ist und daher in kostensensitiven Massenartikeln, wie Haushaltsgeräten, Elektrowerkzeugen o. dgl., einsetzbar ist. Dennoch arbeitet die Weg- und/oder Positionsmeßeinrichtung sehr genau sowie auch empfindlich, so daß diese auch in sicherheitskritischen Anwendungen, beispielsweise in Kraftfahrzeugen, verwendbar ist. Außerdem ist eine höhere Genauigkeit als bei bisherigen Systemen möglich. Schließlich ist eine schnellere Auswertung des Sensorsignals als bisher gegeben. Dadurch sowie aufgrund der gleichzeitigen Erfassung der drei Magnetfeld(B)-Komponenten besteht auch die Möglichkeit, die Geschwindigkeit zu berechnen.

Ein Ausführungsbeispiel der Erfindung mit verschiedenen Weiterbildungen und Ausgestaltungen ist in den Zeichnungen dargestellt und wird im folgenden näher beschrieben. Es zeigen
- Fig. 1: schematisch eine einen Magneten sowie einen Sensor aufweisende Weg- und/oder Positions- und/oder Geschwindigkeitsmeßvorrichtung in der Art einer Prinzipskizze,
- Fig. 2: eine Ausgestaltung des Magneten als zylinderförmigen Stabmagnet,
- Fig. 3: eine weitere Ausgestaltung des Magneten als kugelförmigen Magnet,
- Fig. 4: nochmals eine weitere Ausgestaltung des Magneten,
- Fig. 5: eine Leiterplatte zur Anordnung des Sensors,
- Fig. 6: in schematischer Art die nähere Ausgestaltung des Sensors,
- Fig. 7: ein Blockschaltbild zur Ausgestaltung des Sensors als integrierter Baustein,
- Fig. 8: schematisch eine Waschmaschine mit einer einen Magneten sowie einen Sensor aufweisende Meßvorrichtung,
- Fig. 9: eine Halterung für den Magneten als Einzelteil und
- Fig. 10: ein Gehäuse für den Sensor als Einzelteil.

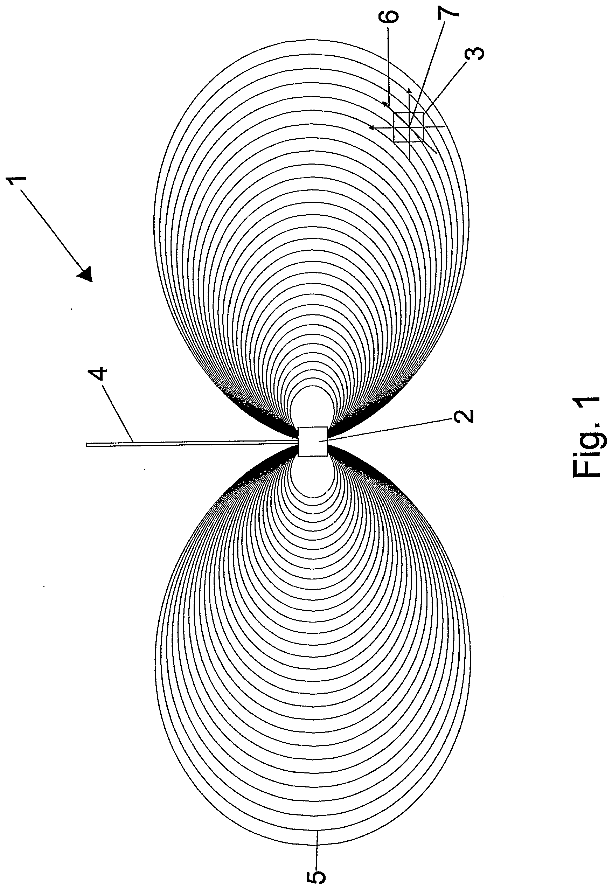

In der als Prinzipskizze dienenden Fig. 1 ist eine Weg- und/oder Positions- und/oder Geschwindigkeitsmeßvorrichtung 1 gezeigt, die einen Magneten 2 und einen die Magnetfeldstärke detektierenden Sensor 3 umfaßt. Der Magnet 2 und/oder der Sensor 3 wirkt mit einem lediglich schematisch gezeichneten, beweglichen Element 4 zusammen, so daß mittels des beweglichen Elementes 4 somit eine Relativbewegung zwischen dem Sensor 3 und dem Magnet 2 bewirkt werden kann. Vorliegend ist der Magnet 2 an dem beweglichen Element 4 angeordnet, das lediglich schematisch angedeutet ist, während der Sensor 3 ortsfest angeordnet ist. Selbstverständlich kann auch umgekehrt der Sensor 3 am beweglichen Element 4 sowie der Magnet 2 ortsfest angeordnet sein, was jedoch nicht weiter betrachtet ist. Der Magnet 2 ist so ausgestaltet, daß dieser ein im wesentlichen dipolförmiges Magnetfeld 5 erzeugt, wie anhand der in Fig. 1 eingezeichneten Feldlinien des Magnetfeldes 5 zu erkennen ist. Im Sensor 3 werden die in einem einzigen sensitiven Punkt 7 und folglich am gleichen Ort 7 wirkenden Komponenten des Magnetfeldes 5 in drei linear unabhängige Raumrichtungen 6 (die sogenannten B-Feld-Komponenten) festgestellt, wie in Fig. 1 schematisch angedeutet ist. Dadurch ist der Weg und/oder die Position und/oder die Geschwindigkeit des beweglichen Elementes 4 aufgrund der vom Sensor 3 jeweilig detektierten, vom Magneten 2 erzeugten Magnetfeldstärke entsprechend den Komponenten des Magnetfeldes 5 in den Raumrichtungen 6 feststellbar.

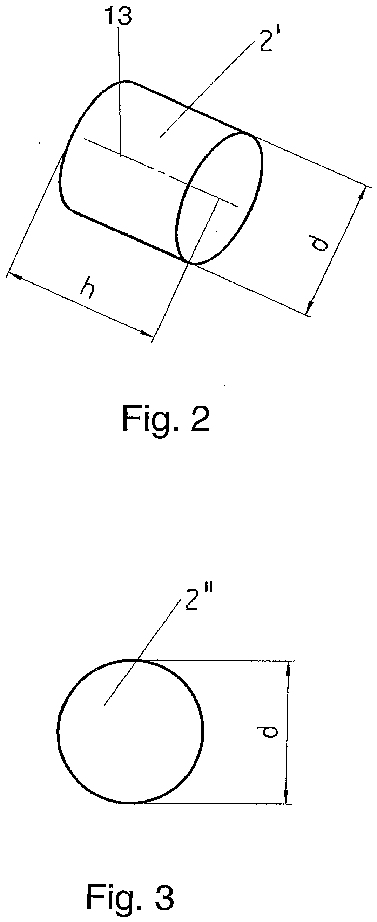

Bei dem Magnet 2 handelt es sich zweckmäßigerweise um einen Permanentmagnet. Geeignet ist beispielsweise ein Stabmagnet 2', welcher in Fig. 2 näher in perspektivischer Ansicht zu sehen ist. Der Stabmagnet 2' ist zylinderförmig ausgestaltet. Um ein weitgehend dipolförmiges Magnetfeld 5 zu gewährleisten, beträgt das Verhältnis von Höhe h zu Durchmesser d für den zylinderförmigen Stabmagneten 2' in etwa 1:1. Der Stabmagnet 2' ist parallel zu seiner die Symmetrieachse darstellenden Mittelachse 13 des Zylinders 2' magnetisiert, wie auch anhand des in Fig. 1 dargestellten Feldlinienverlaufs für das Magnetfeld 5 zu sehen ist. Dabei ist der Stabmagnet 2' so angeordnet, daß seine Mittelachse 13 parallel zur z-Achse des Sensors 3 ist. Die Besonderheit der Feldgeometrie für den Stabmagneten 2' besteht darin, daß in Zylinderkoordinaten ausgedrückt lediglich B-Feld-Komponenenten in radialer Richtung und in Richtung der z-Achse auftreten, während keine azimutale Komponente vorhanden ist. Diese Eigenschaft ermöglicht es in einfacher Weise, den Ort über eine dreidimensionale analytische Funktion aus den gemessenen Magnetfeldkomponenten Bₓ, B_{y} und B_{z} zu berechnen, da die Dipolfunktion für das Magnetfeld 5 des Stabmagneten 2' invertierbar ist und damit zur Berechnung der Koordinaten x, y, z des Ortes verwendet werden kann.

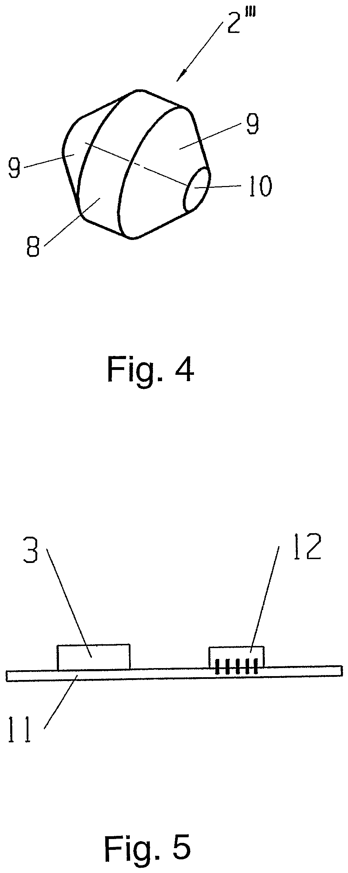

Anstelle eines zylinderförmigen Magneten läßt sich zur Erzeugung eines dipolförmigen Magnetfeldes auch ein kugelförmiger Magnet 2" mit dem Durchmesser d verwenden, welcher in Fig. 3 gezeigt ist. Schließlich ist zur Erzeugung eines dipolförmigen Magnetfeldes 5 auch ein in Fig. 4 gezeigter Magnet 2'" geeignet, der aus einem zylinderförmigen Element 8 besteht, wobei an dessen beiden Grundflächen je ein in etwa kegelförmiges Element 9 mit abgeflachter Spitze 10 angeordnet ist.

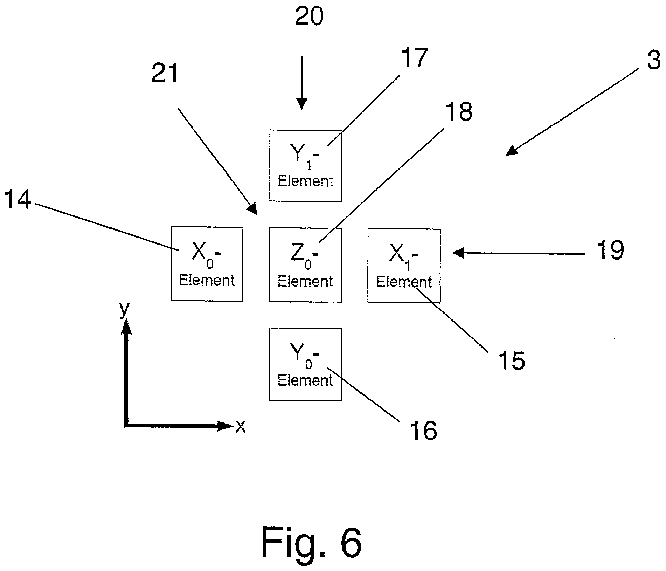

Zweckmäßigerweise handelt es sich bei dem Sensor 3 um einen dreidimensional messenden Hallsensor. Wie anhand von Fig. 6 zu sehen ist, ist der Sensor 3 als dreidimensional messendes Hallsensorsystem ausgebildet und besitzt mehrere Chipoberflächen, nämlich fünf sensitive Hallflächen 14, 15, 16, 17, 18, die in etwa kreuzförmig in der Art eines Sensor-Arrays angeordnet sind. Für die Messung der Magnetfeldkomponente B_{z} in z-Richtung ist eine vertikal zur Chipoberfläche, und damit senkrecht zur Zeichnungsebene messende Hallfläche 18 im Kreuzungspunkt oder Mittelpunkt des Sensor-Arrays als z-Sensor 21 angeordnet. Für die Messung der Magnetfeldkomponente Bₓ in x-Richtung sind zwei parallel zur Chipoberfläche messende Hallflächen 14, 15 dem Kreuzungspunkt des Sensor-Arrays jeweils gegenüberliegend sowie in Richtung der x-Achse des Kreuzes als x-Sensor 19 angeordnet. Die beiden Hallflächen 14, 15 für den x-Sensor 19 sind miteinander elektrisch verbunden, beispielsweise indem die Hallflächen 14, 15 fest miteinander verdrahtet sind. Dadurch wird die jeweilige mittlere Magnetfeldkomponente Bₓ von den beiden Hallflächen 14, 15 des x-Sensors 19 im Kreuzungspunkt des Sensor-Arrays und somit am Ort des z-Sensors 21 bestimmt. Ebenso sind für die Messung der Magnetfeldkomponente B_{y} in y-Richtung zwei parallel zur Chipoberfläche messende Hallflächen 16, 17 dem Kreuzungspunkt des Sensor-Arrays jeweils gegenüberliegend sowie in Richtung der y-Achse des Kreuzes als y-Sensor 20 angeordnet. Die beiden Hallflächen 16, 17 für den y-Sensor 20 sind ebenfalls miteinander elektrisch verbunden, wodurch die jeweilige mittlere Magnetfeldkomponente B_{y} von den beiden Hallflächen 16, 17 des y-Sensors 20 am Ort des z-Sensors 21 bestimmt wird.

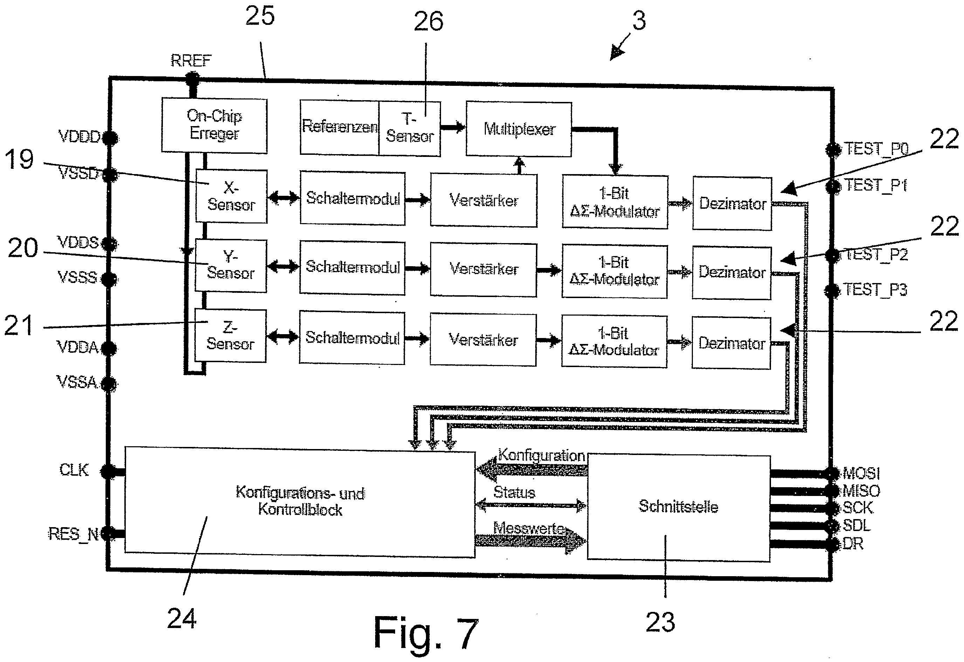

Wie in Fig. 7 zu sehen ist, ist der Sensor 3 mit drei parallelen Analog-Digital-Wandlern 22 versehen. Die Analog-Digital-Wandler erfassen gleichzeitig die Hallsensorspannungen für die Hallflächen 14, 15, 16, 17, 18 des x-Sensors 19, des y-Sensors 20 sowie des z-Sensors 21. Hierzu werden die B-Feld-abhängigen Signale aufbereitet und zu einem Digitalwert in einem Dezimator aufsummiert. Für jeweils die x-, y- sowie die z-Richtung ist eine Analog-Digital-Convertierung durch einen 1-Bit Delta-Sigma-Modulator vorgesehen. Die erste Aufbereitung der Signale geschieht direkt nach der Umwandlungsstufe durch die Summation der bit-Werte aus dem Delta-Sigma-Modulator, anschließend werden die Signale an die Schnittstelle 23 übergeben. Wie man weiter der Fig. 7 entnimmt, sind die Hallflächen 14, 15, 16, 17, 18 des x-Sensors 19, des y-Sensors 20 sowie des z-Sensors 21 sowie die Analog-Digital-Wandler 22 in einem in der Art eines ASIC-Chips ausgestalteten integrierten Schaltkreis 25 angeordnet. Der integrierte Schaltrkreis 25 kann noch weitere Schaltungsteile 24 für die Steuerung des Sensors 3, für die Kommunikation mit dem Sensor 3 o. dgl. enthalten. Schließlich befindet sich im integrierten Schaltungsteil noch ein Temperatursensor 26.

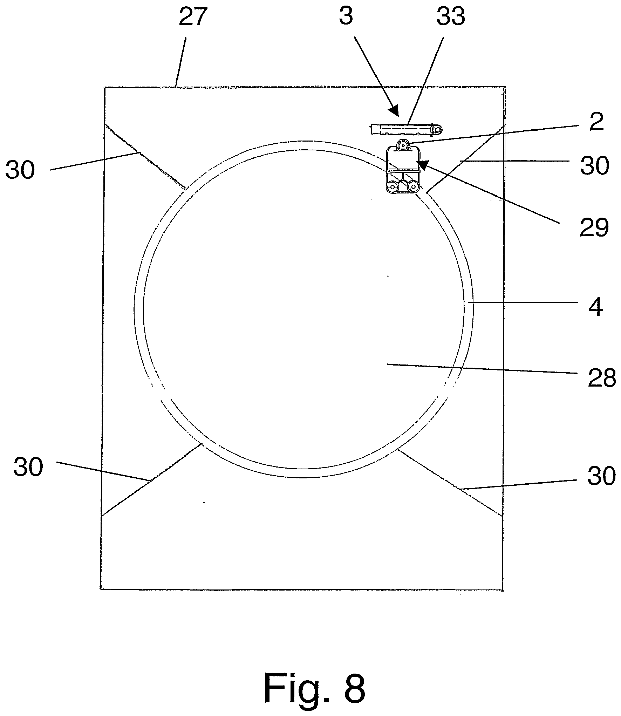

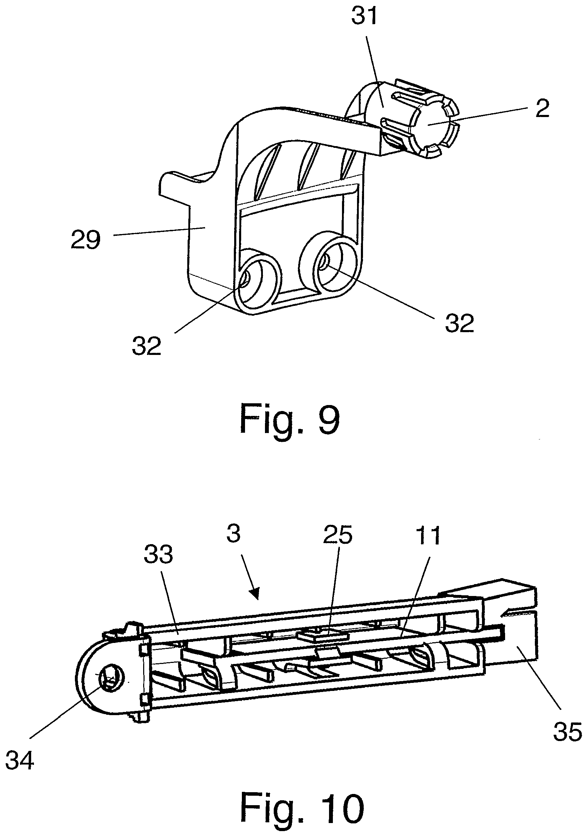

In Fig. 8 ist die Verwendung der Meßvorrichtung 1 in einem Haushaltsgerät, und zwar in einer lediglich schematisch skizzierten Waschmaschine 27 gezeigt. Die Waschmaschine 27 besitzt eine Waschtrommel 28, die drehbar an einer Lageranordnung 4 gelagert ist. Die Lageranordnung 4 ist ihrerseits über Aufhängungen 30 so in der Waschmaschine 27 befestigt, daß Schwingungen, Bewegungen o. dgl. der Waschtrommel 28 auf die Lageranordnung 4 übertragen werden. Die Lageranordnung 4 stellt somit das bewegliche Element dar, mit der der Magnet 2 zusammenwirkt. Hierfür ist der Magnet 2 in einer Halterung 29 angeordnet. Wie der Fig. 9 zu entnehmen ist, ist der Magnet 2 in eine Aufnahme 31 an der Halterung 29 verrastend eingesteckt. Die Halterung 29 besitzt Schraublöcher 32 zur Verschraubung an der Lageranordnung 4, womit die Halterung 29 am beweglichen Element 4 befestigt ist. Der Sensor 3 besitzt ein Gehäuse 33, das in der Nähe der Halterung 29 und dem Magneten 2 zugeordnet an einem gegenüber dem beweglichen Element 4 feststehenden Element in der Waschmaschine 27 fixiert ist, wie anhand der Fig. 8 zu sehen ist. Zur Befestigung besitzt das Gehäuse 33 in Fig. 10 gezeigte Schraubaufnahmen 34. Der eigentliche Sensor 3, der wie bereits erwähnt in der Art eines integrierten Schaltkreises 25 ausgestaltet sein kann, ist auf einer Leiterplatte 11 angeordnet, welche im Gehäuse 33 befindlich ist. Wie in Fig. 5 zu sehen ist, ist auf der Leiterplatte 11 dann noch eine Elektronik 12 zur Auswertung des Sensorsignals befindlich. Für die elektrischen Zuleitungen zum Sensor 3 besitzt das Gehäuse 33 schließlich noch einen in Fig. 10 sichtbaren Steckanschluß 35. Das Sensorsignal wird dann über den Steckanschluß 35 und die Zuleitungen zu einem Mikrocomputer in der Waschmaschine 27 übertragen, wo anhand entsprechender Ansteuerung des Antriebs für die Waschtrommel 28 dann Schwingungen, Resonanzen o. dgl. ausgeglichen werden.

Selbstverständlich kann der Magnet 2 direkt am beweglichen Element 4 befestigt sein, was jedoch nicht weiter gezeigt ist. Zur Befestigung kann beispielsweise eine Verrastung dienen. Desweiteren kann der Magnet 2 auch in das bewegliche Element 4 eingesetzt, in das bewegliche Element 4 integriert o. dgl. sein.

Die Erfindung ist nicht auf das beschriebene und dargestellte Ausführungsbeispiel beschränkt. Sie umfaßt vielmehr auch alle fachmännischen Weiterbildungen im Rahmen der durch die Patentansprüche definierten Erfindung. So kann die Weg- und/oder Positions-und/oder Geschwindigkeitsmeßvorrichtung 1 außer in sonstigen Haushaltsgeräten auch in Kraftfahrzeugen, beispielsweise in Kraftfahrzeugschlössern, zur Fahrwerkserkennung o. dgl. Verwendung finden. Die erfindungsgemäße Vorrichtung gestattet auch eine allgemeine 3-D-Positionsmessung mit absoluten Meßstrecken zwischen beispielsweise 5 bis ca. 50 mm. Darüber hinaus bietet diese Meßvorrichtung viele weitere Einsatzmöglichkeiten für die allgemeine Positionserkennung in der Produktions- und Automatisierungstechnik.

Außerdem kann der 3D-Positionssensor auch für Multimedia-Bedienelementen, ein Multimediainterface o. dgl., beispielsweise in Kraftfahrzeugen mit beschränktem Bauraumvolumen, Verwendung finden. Hierzu kann die Funktionalität Erfassung der dreidimensionalen Bewegung mit zusätzlicher Rotation des Bedienelementes mit einem integrierten Baustein realisiert werden. Die Auswertung der Magnetfelder übernimmt der Mikrocontroller, der für die Kommunikation mit der Fahrzeugelektronik über den CAN-Bus notwendig ist. Neben den genannten entfallenden mechanischen Bauraumproblemen bestehen weitere Vorteile darin, daß die Dichtigkeit gegen eindringende Flüssigkeiten gemäß dem "Cola-Test" sowie die ESD-Problematik, was bei konventionellen Lösungen problematisch ist, durch die Anordnung des Magneten im Bedienrad sowie eine einfache Kapselung gelöst werden kann, da keine leitende Verbindung aus dem Rad heraus mehr notwendig ist.

### Bezugszeichen-Liste:

- 1:: Weg- und/oder Positions- und/oder Geschwindigkeitsmeßvorrichtung / Meßvorrichtung
- 2:: Magnet
- 2':: (zylinderförmiger) Stabmagnet / Zylinder
- 2":: (kugelförmiger) Magnet
- 2"':: Magnet (mit kegelförmigem Element)
- 3:: Sensor
- 4:: bewegliches Element / Lageranordnung (von Waschmaschine)
- 5:: (dipolförmiges) Magnetfeld
- 6:: Raumrichtung
- 7:: Ort (im Sensor) /sensitiver Punkt
- 8:: zylinderförmiges Element
- 9:: kegelförmiges Element
- 10:: (abgeflachte) Spitze
- 11:: Leiterplatte
- 12:: Elektronik
- 13:: Mittelachse (von Zylinder)
- 14,15:: Hallfläche (für x-Sensor)
- 16,17:: Hallfläche (für y-Sensor)
- 18:: Hallfläche (für z-Sensor)
- 19:: x-Sensor
- 20:: y-Sensor
- 21:: z-Sensor
- 22:: Analog-Digital-Wandler
- 23:: Schnittstelle
- 24:: (weiterer) Schaltungsteil
- 25:: integrierter Schaltkreis
- 26:: Temperatursensor
- 27:: Waschmaschine
- 28:: Waschtrommel
- 29:: Halterung
- 30:: Aufhängung
- 31:: Aufnahme
- 32:: Schraubloch (für Halterung)
- 33:: Gehäuse (für Sensor)
- 34:: Schraubaufnahme (am Gehäuse)
- 35:: Steckanschluß

## Patentansprüche

1. Vorrichtung zur Weg- und/oder Positions- und/oder Geschwindigkeitsmessung mit einem Magneten (2) und mit einem die Magnetfeldstärke detektierenden Sensor (3), wobei es sich bei dem Magnet (2) um einen Permanentmagnet handelt, wobei der Magnet (2) ein im wesentlichen dipolförmiges Magnetfeld (5) erzeugt, wobei der Magnet (2) und/oder der Sensor (3) mit einem beweglichen Element (4) zusammenwirkt, wobei mittels des beweglichen Elementes (4) eine Relativbewegung zwischen dem Sensor (3) und dem Magneten (2) bewirkbar ist, und wobei der Sensor (3) die im Sensor (3) am selben Ort (7) wirkenden Komponenten des Magnetfeldes (5) in drei linear unabhängige Raumrichtungen (6) feststellt, derart daß der Weg und/oder die Position und/oder die Geschwindigkeit des beweglichen Elementes (4) aufgrund der vom Sensor (3) detektierten, vom Magneten (2) erzeugten Magnetfeldstärke feststellbar ist, **dadurch gekennzeichnet, daß** es sich bei dem Magnet (2) um einen zylinderförmigen Stabmagnet (2') handelt, dessen Verhältnis von Höhe (h) zu Durchmesser (d) in etwa 1:1 beträgt und der parallel zu seiner die Symmetrieachse bildenden Mittelachse (13) des Zylinders (2') magnetisiert ist, oder daß es sich bei dem Magnet (2) um einen kugelförmigen Magnet (2") handelt, oder daß es sich bei dem Magnet (2"') um ein zylinderförmiges Element (8) handelt, an dessen beiden Grundflächen ein in etwa kegelförmiges Element (9) mit abgeflachter Spitze (10) angeordnet ist.

2. Vorrichtung zur Weg- und/oder Positions- und/oder Geschwindigkeitsmessung nach Anspruch 1, **dadurch gekennzeichnet, daß** es sich bei dem Sensor (3) um einen dreidimensional messenden Hallsensor handelt.

3. Vorrichtung zur Weg- und/oder Positions- und/oder Geschwindigkeitsmessung nach Anspruch 1 oder 2, **dadurch gekennzeichnet, daß** der Sensor (3) als dreidimensional messendes Hallsensorsystem fünf sensitive Hallflächen (14, 15, 16, 17, 18) besitzt, die in etwa kreuzförmig in der Art eines Sensor-Arrays angeordnet sind, daß vorzugsweise für die Messung der Magnetfeldkomponente in z-Richtung eine vertikal zur Chipoberfläche messende Hallfläche (18) im Kreuzungspunkt des Sensor-Arrays als z-Sensor (21) angeordnet ist, daß weiter vorzugsweise für die Messung der Magnetfeldkomponenten in x-sowie y-Richtung jeweils zwei parallel zur Chipoberfläche messende Hallflächen (14, 15; 16, 17) dem Kreuzungspunkt des Sensor-Arrays jeweils gegenüberliegend sowie in Richtung der Achsen des Kreuzes als x- sowie y-Sensoren (19, 20) angeordnet sind, und daß noch weiter vorzugsweise jeweils die beiden Hallflächen (14, 15; 16, 17) für den x-Sensor (19) sowie den y-Sensor (20) miteinander elektrisch verbunden sind, derart daß die jeweilige mittlere Magnetfeldkomponente vom x- sowie y-Sensor (19, 20) am Ort des z-Sensors (21) bestimmt ist.

4. Vorrichtung zur Weg- und/oder Positions- und/oder Geschwindigkeitsmessung nach Anspruch 1, 2 oder 3, **dadurch gekennzeichnet, daß** der Sensor (3) mit wenigstens zwei, insbesondere drei parallelen Analog-Digital-Wandlern (22) versehen ist, daß vorzugsweise die Analog-Digital-Wandler (22) die Hallsensorspannungen für die Hallflächen (14, 15, 16, 17, 18) des x-, y- sowie z-Sensors (19, 20, 21), inbesondere gleichzeitig, erfassen, und daß weiter vorzugsweise die Hallflächen (14, 15, 16, 17, 18) und/oder die Analog-Digital-Wandler (22) und/oder weitere Schaltungsteile (24) für die Steuerung des Sensors (3), für die Kommunikation mit dem Sensor (3) o. dgl. in einem in der Art eines ASIC-Chips ausgestalteten integrierten Schaltkreis (25) angeordnet sind.

5. Vorrichtung zur Weg- und/oder Positions- und/oder Geschwindigkeitsmessung nach einem der Ansprüche 1 bis 4, **dadurch gekennzeichnet, daß** der Magnet (2) direkt am beweglichen Element (4), beispielsweise mit einer Verrastung, befestigt, in das bewegliche Element (4) eingesetzt, in das bewegliche Element (4) integriert o. dgl. ist.

6. Vorrichtung zur Weg- und/oder Positions- und/oder Geschwindigkeitsmessung nach einem der Ansprüche 1 bis 5, **dadurch gekennzeichnet, daß** der Magnet (2) in einer Halterung (29) angeordnet ist, und daß vorzugsweise die Halterung (29) am beweglichen Element (4) befestigt ist.

7. Vorrichtung zur Weg- und/oder Positions- und/oder Geschwindigkeitsmessung nach einem der Ansprüche 1 bis 6 **dadurch gekennzeichnet, daß** der Sensor (3), der insbesondere in der Art eines integrierten Schaltkreises (25) ausgestaltet ist, auf einer Leiterplatte (11) angeordnet ist, daß vorzugsweise eine Elektronik (12) zur Auswertung des Sensorsignals auf der Leiterplatte (11) befindlich ist, daß weiter vorzugsweise die Leiterplatte (11) sich mitsamt dem Sensor (3) in einem Gehäuse (33) befindet, und daß noch weiter vorzugsweise das Gehäuse (33) an einem gegenüber dem beweglichen Element (4) feststehenden Element befestigt ist.

## Claims

1. Device for measuring movement and/or position and/or speed, comprising a magnet (2) and a sensor (3) detecting the magnetic field strength, wherein the magnet (2) is a permanent magnet, wherein the magnet (2) generates a substantially dipole-shaped magnetic field (5), wherein the magnet (2) and/or the sensor (3) interact(s) with a movable element (4), wherein a relative movement between the sensor (3) and the magnet (2) can be brought about by means of the movable element (4), and wherein the sensor (3) establishes the components of the magnetic field (5) that are acting in the sensor (3) at the same location (7) in three linearly independent spatial directions (6), in such a way that the movement and/or the position and/or the speed of the movable element (4) can be established on the basis of the magnetic field strength generated by the magnet (2) and detected by the sensor (3), **characterized in that** the magnet (2) is a cylindrical bar magnet (2'), the ratio of the height (h) to the diameter (d) of which is approximately 1:1 and which is magnetized parallel to the central axis (13) thereof, forming the axis of symmetry, of the cylinder (2'), or **in that** the magnet (2) is a spherical magnet (2"), or **in that** the magnet (2''') is a cylindrical element (8), on the two main faces of which an approximately conical element (9) with a flattened tip (10) is arranged.

2. Device for measuring movement and/or position and/or speed according to Claim 1, **characterized in that** the sensor (3) is a three-dimensionally measuring Hall sensor.

3. Device for measuring movement and/or position and/or speed according to Claim 1 or 2, **characterized in that**, as a three-dimensionally measuring Hall sensor system, the sensor (3) has five sensitive Hall faces (14, 15, 16, 17, 18), which are arranged approximately in the form of a cross in the manner of a sensor array, **in that** preferably, for measuring the magnetic field component in the z direction, a Hall face (18) measuring vertically to the chip surface is arranged as a z sensor (21) at the crossing point of the sensor array, **in that** further preferably, for measuring the magnetic field components in the x direction and the y direction, two Hall faces (14, 15; 16, 17) measuring parallel to the chip surface are respectively arranged as x and y sensors (19, 20) lying opposite one another in each case the crossing point of the sensor array and in the direction of the axes of the cross, and **in that** still further preferably the two Hall faces (14, 15; 16, 17) for the x sensor (19) and the y sensor (20) are respectively connected to one another electrically in such a way that the respective mean magnetic field component of the x sensor and y sensor (19, 20) at the location of the z sensor (21) is determined.

4. Device for measuring movement and/or position and/or speed according to Claim 1, 2 or 3, **characterized in that** the sensor (3) is provided with at least two, in particular three, parallel analogue-digital converters (22), **in that** preferably the analogue-digital converters (22) detect the Hall sensor voltages for the Hall faces (14, 15, 16, 17, 18) of the x, y and z sensors (19, 20, 21), in particular simultaneously, and **in that** further preferably the Hall faces (14, 15, 16, 17, 18) and/or the analogue-digital converters (22) and/or further circuit parts (24) for controlling the sensor (3) are arranged in an integrated circuit (25) designed in the manner of an ASIC chip for the communication with the sensor (3) or the like.

5. Device for measuring movement and/or position and/or speed according to one of Claims 1 to 4, **characterized in that** the magnet (2) is fastened directly to the movable element (4), for example with locking engagement, is fitted in the movable element (4), is integrated in the movable element (4) or the like.

6. Device for measuring movement and/or position and/or speed according to one of Claims 1 to 5, **characterized in that** the magnet (2) is arranged in a mount (29), and **in that** preferably the mount (29) is fastened to the movable element (4).

7. Device for measuring movement and/or position and/or speed according to one of Claims 1 to 6, **characterized in that** the sensor (3), which is designed in particular in the manner of an integrated circuit (25), is arranged on a printed circuit board (11), **in that** preferably there are on the printed circuit board (11) electronics (12) for evaluating the sensor signal, **in that** further preferably the printed circuit board (11) is located together with the sensor (3) in a housing (33), and **in that** still further preferably the housing (33) is fastened to an element that is fixed with respect to the movable element (4).

## Revendications

1. Dispositif de mesure de déplacement et/ou de position et/ou de vitesse comportant un aimant (2) et un capteur (3) détectant l'intensité du champ magnétique, dans lequel l'aimant (2) est un aimant permanent, dans lequel l'aimant (2) génère un champ magnétique (5) sensiblement bipolaire, dans lequel l'aimant (2) et/ou le capteur (3) coopère/coopèrent avec un élément mobile (4), dans lequel un mouvement relatif entre le capteur (3) et l'aimant (2) peut être produit au moyen de l'élément mobile (4), et dans lequel le capteur (3) établit les composantes du champ magnétique (5) agissant dans le capteur (3) en un même emplacement (7) dans trois directions spatiales (6) linéairement indépendantes de manière à ce que le déplacement et/ou la position et/ou la vitesse de l'élément mobile (4) puisse/puissent être établi(e)(s) sur la base des intensités du champ magnétique générées par l'aimant (2) et détectées par le capteur (3), **caractérisé en ce que** l'aimant (2) est un barreau aimanté cylindrique (2') dont le rapport de la hauteur (h) au diamètre (d) est approximativement égal à 1:1 et qui est magnétisé parallèlement à son axe central (13) du cylindre (2') formant l'axe de symétrie, ou **en ce que** l'aimant (2) est un aimant sphérique (2"), ou **en ce que** l'aimant (2"') est un élément cylindrique (8), sur les deux surfaces de base duquel est disposé un élément approximativement conique (9) ayant un sommet aplati (10).

2. Dispositif de mesure de déplacement et/ou de position et/ou de vitesse selon la revendication 1, **caractérisé en ce que** le capteur (3) est un capteur à effet Hall effectuant une mesure tridimensionnelle.

3. Dispositif de mesure de déplacement et/ou de position et/ou de vitesse selon la revendication 1 ou 2, **caractérisé en ce que** le capteur (3), en tant que système de capteur à effet Hall effectuant une mesure tridimensionnelle, possède cinq surfaces sensibles à effet Hall (14, 15, 16, 17, 18), qui sont disposées approximativement en croix à la manière d'un réseau de capteurs, **en ce que**, de façon préférable, une surface à effet Hall (18) effectuant la mesure verticalement par rapport à la surface de puce est disposée au point d'intersection du réseau de capteurs en tant que capteur z (21) pour la mesure de la composante de champ magnétique dans la direction z, **en ce que**, de façon plus préférable, deux surfaces à effet Hall (14, 15 ; 16, 17) effectuant la mesure respectivement parallèles à la surface de puce sont disposées de manière respectivement opposée le point d'intersection du réseau de capteurs et dans la direction des axes de la croix en tant que capteurs x et y (19, 20) pour la mesure des composantes de champ magnétique dans les directions x et y, et **en ce que**, de façon encore plus préférable, les deux surfaces à effet Hall (14, 15 ; 16, 17) respectivement destinées au capteur x (19) et au capteur y (20) sont reliées électriquement l'une à l'autre de manière à ce que la composante de champ magnétique moyenne respective soit déterminée par les capteurs x et y (19, 20) à l'emplacement du capteur z (21).

4. Dispositif de mesure de déplacement et/ou de position et/ou de vitesse selon la revendication 1, 2 ou 3, **caractérisé en ce que** le capteur (3) est muni d'au moins deux, notamment trois convertisseurs analogique-numérique (22) parallèles, **en ce que**, de façon préférable, les convertisseurs analogique-numérique (22) détectent les tensions des capteurs à effet Hall destinés aux surfaces à effet Hall (14, 15, 16, 17, 18) des capteurs x, y et z (19, 20, 21), notamment de manière simultanée, et **en ce que**, de façon plus préférable, les surfaces à effet Hall (14, 15, 16, 17, 18) et/ou les convertisseurs analogique-numérique (22) et/ou d'autres parties de commutation (24) destiné(e)s à la commande du capteur (3) pour la communication avec le capteur (3) ou autre, sont disposé(e)s dans un circuit de commutation intégré (25) réalisé à la manière d'une puce ASIC.

5. Dispositif de mesure de déplacement et/ou de position et/ou de vitesse selon l'une quelconque des revendications 1 à 4, **caractérisé en ce que** l'aimant (2) est directement fixé à l'élément mobile (4), par exemple au moyen d'un dispositif d'encliquetage, est inséré dans l'élément mobile (4) et est intégré à l'élément mobile (4), ou autre.

6. Dispositif de mesure de déplacement et/ou de position et/ou de vitesse selon l'une quelconque des revendications 1 à 5, **caractérisé en ce que** l'aimant (2) est disposé dans un dispositif de support (29), et **en ce que**, de façon préférable, le dispositif de support (29) est fixé à l'élément mobile (4).

7. Dispositif de mesure de déplacement et/ou de position et/ou de vitesse selon l'une quelconque des revendications 1 à 6, **caractérisé en ce que** le capteur (3), qui est notamment réalisé à la manière d'un circuit de commutation intégré (25), est disposé sur une carte de circuit imprimé (11), **en ce que**, de façon préférable, une électronique (12) destinée à l'évaluation du signal de capteur se trouve sur la carte de circuit imprimé (11), **en ce que**, de façon plus préférable, la carte de circuit imprimé (11) se trouve dans un boîtier (33) en association avec le capteur (3), et **en ce que**, de façon encore plus préférable, le boîtier (33) est fixé à un élément fixe par rapport à l'élément mobile (4).
